# EUROPEAN PATENT APPLICATION

(11) **EP 1 920 835 A2**
(43) Date of publication of application: **14.05.2008**
(21) Application number: 07118010.3
(22) Date of filing: 08.10.2007
(51) Int. Cl.: B01J 23/63, B01D 53/44, B01J 35/04

(54) **Catalyst-carried particulate filter**

(30) Priority: 08.11.2006 JP 2006303136
(71) Applicant: Mazda Motor Corporation, Fuchu-cho Aki-gun Hiroshima, Hiroshima 730-8670 (JP)
(72) Inventor: Okamoto, Kenji, Hiroshima Hiroshima 730-8670 (JP); Yamada, Hiroshi, Hiroshima Hiroshima 730-8670 (JP); Harada, Koichiro, Hiroshima Hiroshima 730-8670 (JP); Suzuki, Kenji, Hiroshima Hiroshima 730-8670 (JP); Tsushio, Yoshinori, Hiroshima Hiroshima 730-8670 (JP); Fujita, Hiroki, Hiroshima Hiroshima 730-8670 (JP); Takami, Akihide, Hiroshima Hiroshima 730-8670 (JP)
(74) Representative: Thoma, Michael

(57) **Abstract**

A catalyst-carried particulate filter contains a catalyst obtained by mixing Pt/alumina acting to promote the burning of particulates in a high temperature range, a second oxide acting to promote the burning of particulates in a low temperature range and a first oxide acting to promote the burning of particulates in an intermediate temperature range.

## Description

### BACKGROUND OF THE INVENTION

### (a) Field of the Invention

This invention relates to catalyst-carried particulate filters.

### (b) Description of the Related Art

Exhaust gases from diesel engines using fuels containing diesel oil as a main component and exhaust gases from gasoline engines using fuels containing gasoline as a main component to burn them under fuel-lean conditions are known to contain particulates (particulate matters (PM)) which are suspended particulate matters containing carbon particles. To restrain particulates from being exhausted to the atmosphere, a filter for trapping particulates in exhaust gas is disposed in an exhaust gas passage of such an engine. When the amount of particulates deposited on the filter becomes large, it is necessary to burn the particulates to remove them from the filter and thereby regenerate the filter.

An example of known methods for regenerating the filter is to dispose an oxidation catalyst in the exhaust gas passage upstream of the filter and increase the amount of fuel injected into the engine combustion chamber to supply unburned fuel to the oxidation catalyst. According to this method, heat due to oxidative reaction of the unburned fuel to the catalyst increases the temperature of exhaust gas flowing into the filter, whereby particulates on the filter ignite and burn.

Particulates trapped on filters normally do not ignite and burn until their temperature exceed 600°C. If no special measure is taken, a large amount of fuel will be needed to raise the temperature of exhaust gas on the oxidation catalyst. An existing measure to cope with this problem is to carry on the filter body a catalyst for promoting the burning of particulates. For example, Published Japanese Patent Application No. H09-173866 describes the formation of a catalyst layer by carrying, on the walls of exhaust gas channels in the filter body, Pt/alumina in which platinum (Pt) is carried as a catalytic metal on alumina. In this case, alumina is used as a support material for carrying Pt thereon with high dispersivity and Pt acts to reduce the burning temperature of the particulates.

Published Japanese Patent Application No. 2005-262184 describes the formation of a layer of catalyst obtained by carrying Pt on a zirconium-yttrium (Zr-Y) mixed oxide (composite oxide) having oxygen ion conductivity. In this case, when particulates adhere to the Zr-Y mixed oxide so that the catalyst layer produces local, low oxygen concentration sites, oxygen ions move from high-oxygen concentration sites via the mixed oxide to the low-oxygen concentration sites, are converted into active oxygen species (O₂) and then released. The active oxygen species are used for oxidative reaction of particulates to Pt and, therefore, serve as ignition sites. This results in lowering the temperature at which effective burning of particulates starts.

Published Japanese Patent Application No. 2003-334443 describes that a catalyst obtained by carrying Pt on a cerium-zirconium (Ce-Zr) mixed oxide is used as a material for oxidizing particulates. This technique uses the oxygen storage/release capacity of the Ce-Zr mixed oxide to lower the burning temperature of particulates.

As seen from the above, research and developments so far in catalysts for burning particulates focus on how the temperature required to burn particulates should be lowered. However, particulates are not uniformly deposited over the whole of the filter. Therefore, even if the burning of particulates starts at a relatively low temperature by the action of the catalyst, the particulates are easily left as unburned residue.

For example, in filter cells whose downstream ends in the flow direction of exhaust gas are closed, a larger amount of particulates is deposited at a position closer to the downstream ends and at a position closer to their radial center where a larger amount of exhaust gas flows. However, even if particulates in contact with the catalyst layer of the filter body burn at relatively low temperatures by the action of the catalyst, the quantity of heat produced by the burning is not so large. Therefore, the whole layer of particulates deposited is not necessarily heated up to the spontaneous ignition temperature of particulates (600°C or higher). As a result, in the vicinity of the surface of the layer of particulate deposit which is hardly influenced by the catalyst, particulates do not burn and are left as unburned residue. Hence, when the temperature of exhaust gas flowing into the filter is lower than the spontaneous ignition temperature, the burning of particulates may be stopped even if it is initiated by the action of the catalyst.

### SUMMARY OF THE INVENTION

An object of the present invention is to surely regenerate the filter and, more specifically, to produce in a catalyst layer ignition sites providing the burning of particulates at relatively low temperatures and utilize the burning at the ignition sites to allow the burning temperature of particulates to gradually rise to higher temperatures and then to the spontaneous ignition temperature.

To attain the above object, the present invention provides a combination of a plurality of catalyst components having different temperature ranges within which the burning of particulates is promoted.

Specifically, the invention is directed to a catalyst-carried particulate filter in which a catalyst is carried on the walls of exhaust gas channels in the body of a filter for trapping particulates in exhaust gas, wherein the catalyst contains Pt/alumina obtained by carrying Pt on alumina and first and second oxides for releasing active oxygen by heating, and wherein when a mixture of the Pt/alumina and carbon powder, a mixture of the first oxide and carbon powder and a mixture of the second oxide and carbon powder are measured in terms of TG-DTA, the DTA profile of the mixture containing the first oxide exhibits an exothermic peak higher than the quantity of exothermic heat of the mixture containing the Pt/alumina at a lower temperature than the temperature at the exothermic peak thereof and the DTA profile of the mixture containing the second oxide exhibits an exothermic peak higher than the quantity of exothermic heat of the mixture containing the first oxide at a lower temperature than the temperature at the exothermic peak thereof

Since each of the first and second oxides releases active oxygen by heating, they act to promote the burning of particulates.

When the mixture of the second oxide and carbon black is measured in terms of TG-DTA (Thermogravimetry-Differential Thermal Analysis) af burning of carbon powder, an exothermic peak appears at a lower temperature than when the other mixtures are measured. This means that when the temperature of the filter having trapped particulates is increased, ignition sites where particulates ignite and burn are produced by the second oxide to start the burning.

Thus, the catalyst of the catalyst-carried particulate filter according to the invention contains not only the second oxide developing an exothermic peak in a low temperature range and Pt/alumina developing an exothermic peak in a high temperature range but also the first oxide developing an exothermic peak in an intermediate temperature range. Therefore, once ignition sites are produced by the action of the second oxide to start the burning of particulate, the first oxide in turn acts to promote the burning of particulates in the intermediate temperature range even if the temperature increase due to the burning is not so large. In other words, the burning of particulates due to the second oxide in the low temperature range is continuously followed by the burning of particulates due to the first oxide in the intermediate temperature range.

Then, with increasing temperature resulting from the burning of particulates due to the first oxide, Pt/alumina in turn acts to allow the burning of particulates in the intermediate temperature range to be continuously followed by the burning of particulates in the high temperature range. Thereafter, the burning of particulates due to Pt/alumina raises the filter temperature to the spontaneous ignition temperature of particulates.

According to the invention, since the catalyst employs a combination of three kinds of catalyst components (Pt/alumina, the first oxide and the second oxide) having different exothermic peaks of TG-DTA, the burning of particulates can be easily continued from the start of burning in a low temperature range to the spontaneous ignition of particulates. This is advantageous in surely regenerating the filter with efficiency and without incurring deterioration of fuel economy and producing unburned residue of particulates.

The first oxide is preferably a mixed oxide having oxygen storage/release capacity, such as a Ce-Zr-based mixed oxide or a Ce-Zr-Nd-based mixed oxide. Furthermore, a catalytic metal, such as Pt, may be carried on the mixed oxide.

The second oxide is preferably a mixed oxide having oxygen ion conductivity and, for example, may be a mixed oxide containing Zr and a rare earth element other than Ce, such as a Zr-Nd-based mixed oxide. Furthermore, a catalytic metal, such as Pt, may be carried on the mixed oxide.

### BRIEF DESCRIPTION OF THE DRAWINGS

Figure **1** is an exhaust gas purification system for a diesel engine.
Figure **2** is a front view schematically showing a particulate filter.
Figure **3** is a vertically cross-sectional view schematically showing the particulate filter.
Figure **4** is an enlarged cross-sectional view schematically showing a wall that separates an exhaust gas inflow channel from an exhaust gas outflow channel in the particulate filter.
Figure **5** is a graph showing DTA profiles of carbon burning of an inventive example (a mixture of three catalyst components) and comparative examples (individual catalyst components) determined by TG-DTA.
Figure **6** is a graph showing DTA profiles of carbon burning of examples (mixtures of two catalyst components) determined by TG-DTA.
Figure **7** is a graph showing influences of carriage of Pt on a Zr-Nd mixed oxide and a Ce-Zr-Nd mixed oxide on their DTA profiles of carbon burning.

### DETAILED DESCRIPTION OF THE INVENTION

Hereinafter, a preferred embodiment of the invention will be described with reference to the drawings. Note that the following description of the preferred embodiment is merely illustrative in nature and is not intended to limit the scope, applications and use of the invention.

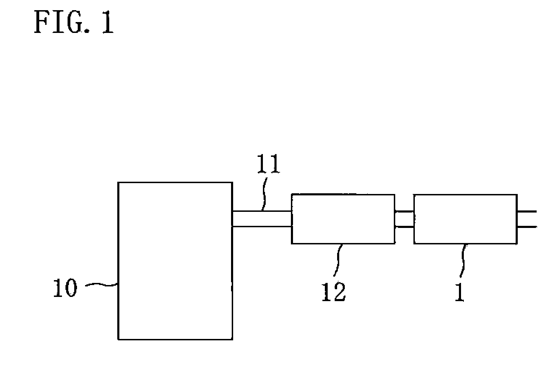

In Figure 1, reference numeral 1 denotes a particulate filter (hereinafter, referred to simply as a "filter") disposed in an exhaust passage **11** of a diesel engine **10.** An upstream catalyst **12** is disposed in the exhaust passage **11** upstream of the filter **1** in the flow direction of exhaust gas. An oxidation catalyst or a NOx trap catalyst or both can be disposed as the upstream catalyst **12.**

The oxidation catalyst is obtained by carrying a catalytic metal, such as Pt or Pd, on a support material such as active alumina and acts to oxidize HC and CO in the exhaust gas. When the oxidation catalyst is disposed upstream of the filter 1, HC and CO in the exhaust gas are oxidized by the oxidation catalyst and heat of the oxidation combustion increases the temperature of exhaust gas flowing into the filter 1. Furthermore, NO in the exhaust gas is oxidized into NO₂ by the oxidation catalyst and produced NO₂ is then supplied as an oxidizing agent for burning particulates to the filter 1.

The NOx trap catalyst is obtained by carrying, on a support material such as active alumina, a NOx storage component (such as an alkali earth metal, typically barium (Ba), or an alkali metal) for absorbing NOx in the exhaust gas at high oxygen concentrations in the exhaust gas (at lean air-fuel ratios) and a catalytic metal, such as Pt, for reducing NOx released from the NOx storage component when the oxygen concentration in the exhaust gas drops (at stoichiometric or rich air-fuel ratios).

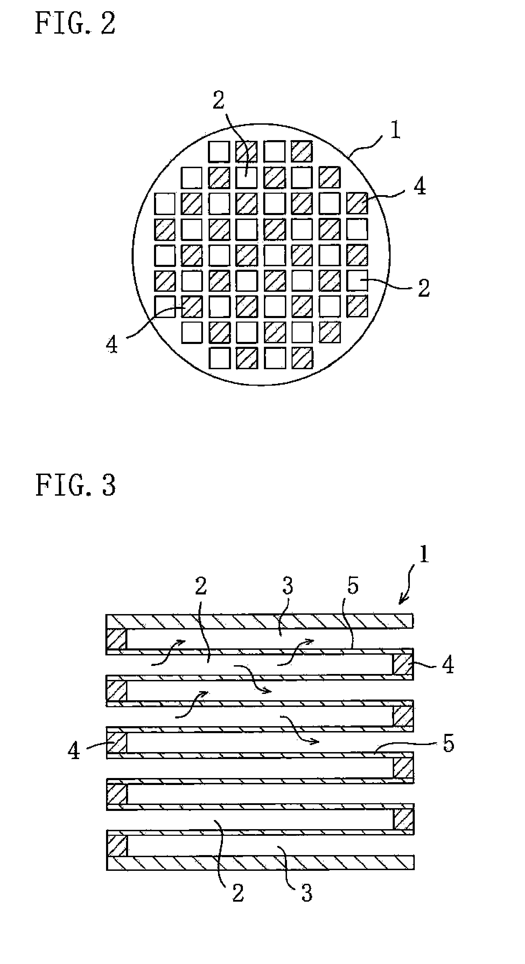

As schematically shown in Figures **2** and **3,** the filter **1** has a honeycomb structure in which a large number of exhaust gas channels **2** and **3** run in parallel with each other. Specifically, the filter **1 has** a structure in which a plurality of exhaust gas inflow channels **2 and** a plurality of exhaust gas outflow channels **3** are alternately arranged vertically and horizontally. Each exhaust gas inflow channel 2 is closed at the downstream end by a plug **4,** while each exhaust gas outflow channel **3** is closed at the upstream end by a **plug 4.** The adjacent exhaust gas inflow and outflow channels **2** and **3** are separated from each other by a thin partition **wall 5.** In Figure **2,** the hatched parts denote the plugs 4 at the upstream ends of the exhaust gas outflow channel **3.**

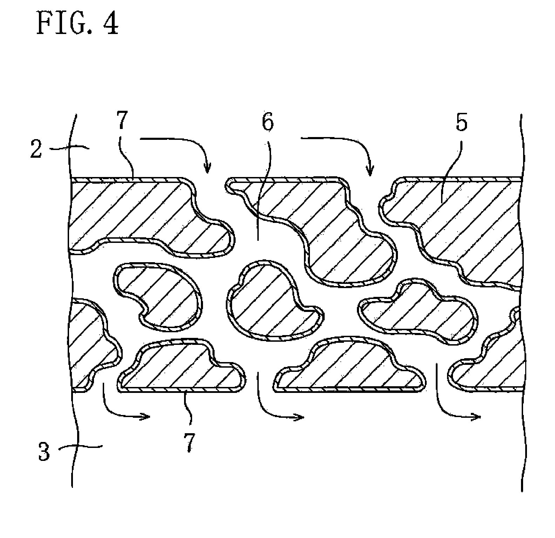

The body of the filter **1** is formed of cordierite or an inorganic porous material, such as SiC, Si₃N₄ or sialon. The exhaust gas flowing into each exhaust gas inflow channel **2** flows out through the surrounding partition walls **5** into the adjacent exhaust gas outflow channels **3,** as shown in arrows in Figure **3. More** specifically, as shown in Figure **4,** each partition wall **5** is formed with micro pores (exhaust gas channels) **6** communicating the exhaust gas inflow channel **2** with the adjacent exhaust gas outflow channel **3** so that the exhaust gas flows through the micro pores **6**. Particulates are trapped and deposited mainly on the wall surfaces of the exhaust gas inflow channels **2** and the micro pores **6.**

A catalyst layer **7** is coated on the walls of all the exhaust gas channels (i.e., exhaust gas inflow channels **2,** exhaust gas outflow channels **3** and micro pores **6)** in the body of the filter **1.** However, it is not necessarily required to form the catalyst layer on the walls of the exhaust gas outflow channels **3.**

The filter **1** according to the invention is characterized in that the catalyst layer **7** contains Pt/alumina obtained by carrying Pt on alumina and first and second oxides for releasing active oxygen by heating and these catalyst components have different temperature regions within which they effectively act to burn particulates. Examples of the first oxide, include mixed oxides having oxygen storage/release capacity, such as Ce-Zr-based mixed oxides, and examples of the second oxide include mixed oxides having oxygen ion conductivity, such as mixed oxides containing Zr and a rare earth element other than Ce.

A description is given below of a combination of the above three catalyst components in terms of particulate burning characteristics determined by TG-DTA.

### Composition of Each Catalyst Component

Prepared as Pt/alumina was one in which 1.9% by mass of Pt is carried on active alumina containing 5% by mass of lanthanum (La). Furthermore, a cerium-zirconium-neodymium (Ce-Zr-Nd) mixed oxide was prepared as a first oxide and a Zr-Nd mixed oxide was prepared as a second oxide. The composition of the Ce-Zr-Nd mixed oxide was a CeO₂/ZrO₂/Nd₂O₃ mass ratio af 57.5:22.5:10. The composition of the Zr-Nd mixed oxide was a ZrO₂/Nd₂O₃ mass ratio of 73.5:26.5. In other words, the Ce-Zr-Nd mixed oxide contains 50% or more by mass of CeO₂ and the Zr-Nd mixed oxide contains 50% or more by mass of ZrO₂.

### TG-DTA

Prepared were four samples for evaluation in each of which catalyst powder and carbon black (a substitute for particulates) were well mixed together at a mass ratio of 4:1. Four kinds of catalyst powders prepared in advance were powder of Pt/alumina, powder of Ce-Zr-Nd mixed oxide, powder of Zr-Nd mixed oxide and powder of a mixture of the three catalyst components. The mixture of the three catalyst components (corresponding to an inventive example of the invention) was obtained by mixing Pt/alumina, the Ce-Zr-Nd mixed oxide and the Zr-Nd mixed oxide at a mass ratio of 1:1:1. Each kind of catalyst powder was aged in advance by keeping it at 800°C in the atmospheric environment for 24 hours. Also prepared was a sample for evaluation containing carbon black only (no catalyst).

Each sample weighed in 2.5 mg was put into a sample container made of alumina and the sample container was set in a balance for TG-DTA through which carrier gas flowed. After the base line was stabilized, the sample was increased in temperature from 100°C to 800°C at a rate of 10°C/min and measured in terms of TG-DTA during the time. The carrier gas used was a gas in which 250 ppm NO₂ was added to a gas mixture of O₂ (10% by volume), N₂ (40% by volume) and Ar (50% by volume). The gas flow rate was 200 mL/min.

### Analysis Results

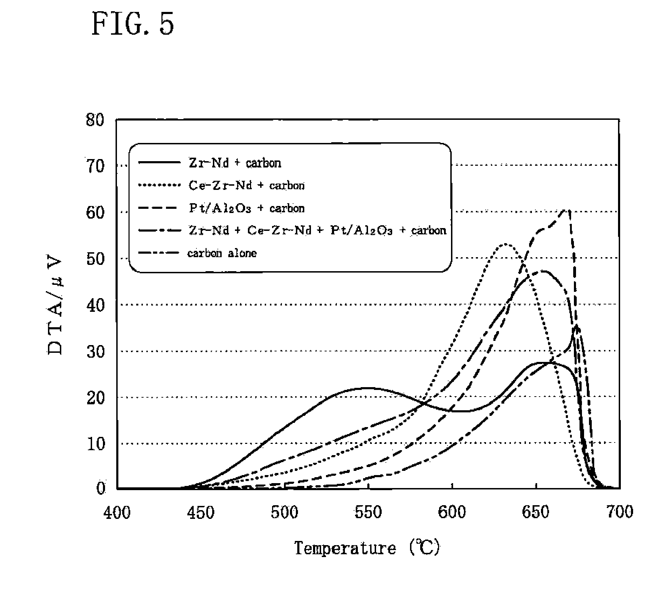

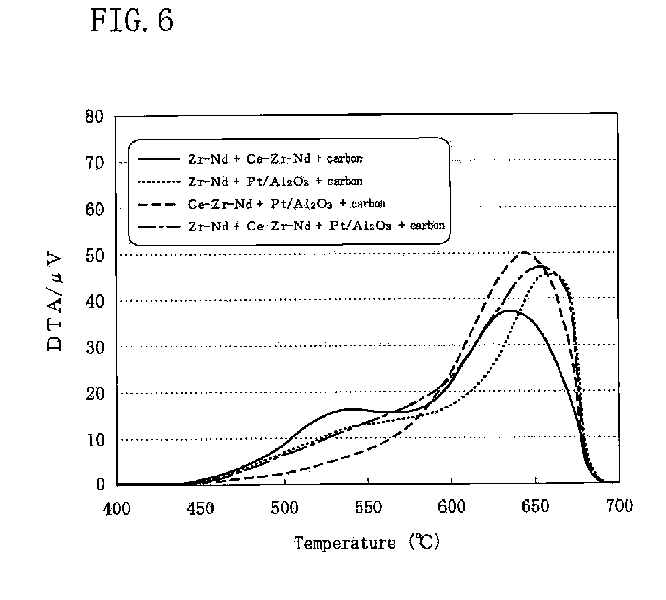

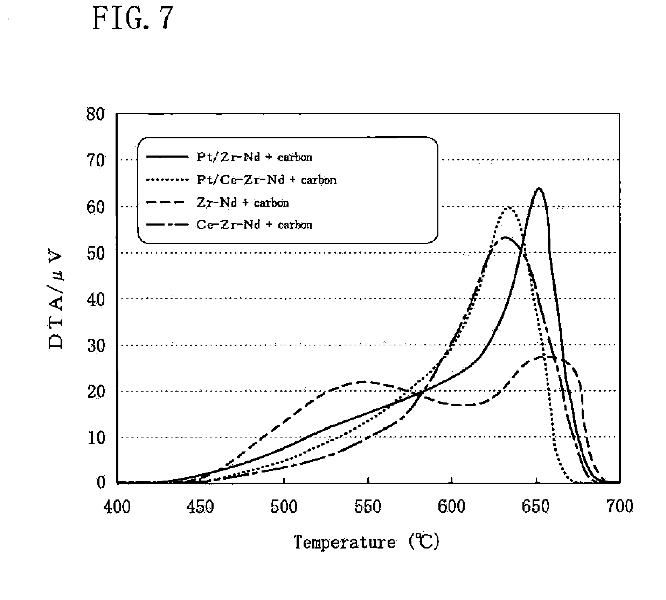

The measurement results from TG-DTA are shown in Figure **5.** In this figure, "Ce-Zr-Nd" denotes the Ce-Zr-Nd mixed oxide and "Zr-Nd" denotes the Zr-Nd mixed oxide. This applies also to Figures **6 and** 7.

Referring to Figure 5, for Pt/alumina, an exothermic peak appears in the vicinity of 670°C which is within a high temperature range close to the spontaneous ignition temperature of carbon black. For the Ce-Zr-Nd mixed oxide as a first oxide, an exothermic peak higher than the quantity of exothermic heat of Pt-alumina appears in the vicinity of 630°C lower than the exothermic peak of Pt/alumina. For the Zr-Nd mixed oxide as a second oxide, an exothermic peak higher than the quantity of exothermic heat of the Ce-Zr-Nd mixed oxide appears in the vicinity of 550°C lower than the exothermic peak of the Ce-Zr-Nd mixed oxide. For the Zr-Nd mixed oxide, another exothermic peak appears in the vicinity of 650°C.

For the inventive example that is a mixture of the three catalyst components, an exothermic peak appears around just over 650°C, which is an influence of Pt/alumina. Figure 5 shows that the quantity of exothermic heat of the inventive example is large even at the exothermic peak temperature due to spontaneous ignition of carbon black (in the vicinity of 675°C). Furthermore, the inventive example has a larger quantity of exothermic heat in a low temperature range (from 450°C inclusive to 580°C exclusive) than Pt/alumina and the Ce-Zr-Nd mixed oxide, which is due to the Zr-Nd mixed oxide. Furthermore, the inventive example has a larger quantity of exothermic heat in an intermediate temperature range (from 580°C inclusive to 630°C exclusive) than Pt/alumina and the Zr-Nd mixed oxide, which is due to the Ce-Zr-Nd mixed oxide. Thus, as is obvious from Figure 5, the inventive example, which is a mixture of the three catalyst components, has a DTA profile smoothly rising from the low temperature range to a high temperature range (630°C and higher).

Therefore, it can be seen that according to the inventive example, ignition sites are produced within the low temperature range by the action of the Zr-Nd mixed oxide to start the burning of particulates, the burning of particulates in the low temperature range is followed, with increasing catalyst temperature due to the burning, by the burning of particulates in the intermediate temperature range by the action of the Ce-Zr-Nd mixed oxide, the burning of particulates in the intermediate temperature range is then followed by the burning of particulates by the action of Pt-alumina and, in this manner, the particulate temperature rises to the spontaneous ignition temperature.

### Case of Mixture of Two Catalyst Components

To verify the effectiveness of the inventive example which is a mixture of the three catalyst components, mixtures of two catalyst components were measured as comparative examples in terms of TG-DTA in the same manner as in the inventive example. Prepared as the mixtures of two catalyst components were three kinds of mixtures: a mixture of the Zr-Nd mixed oxide and the Ce-Zr-Nd mixed oxide; a mixture of the Zr-Nd mixed oxide and Pt/alumina; and a mixture of the Ce-Zr-Nd mixed oxide and Pt/alumina. The mixture ratios of these mixtures were all 1:1 in mass ratio. The mixture ratio of each catalyst powder to carbon black was 4:1 in mass ratio. Furthermore, each catalyst powder was aged in advance in the same manner as in the inventive example. The measurement results of the comparative examples are shown in Figure **6,** together with the measurement results of the inventive example.

For the mixture of the Zr-Nd mixed oxide and the Ce-Zr-Nd mixed oxide, an exothermic peak appears in the vicinity of 540°C by the influence of the Zr-Nd mixed oxide but a valley appears in the vicinity of 575°C, which does not provide a smoothly rising DTA profile. In addition, its exothermic peak in a high temperature range is low. For the mixture of the Zr-Nd mixed oxide and Pt/alumina, a relatively high exothermic peak appears in the vicinity of 650°C but its quantity of exothermic heat is small in an intermediate temperature range, which does not provide a smoothly rising DTA profile. For the mixture of the Ce-Zr-Nd mixed oxide and Pt/alumina, a high exothermic peak appears in the vicinity of 640°C but its quantity of exothermic heat is small in a low temperature range.

In view of the above, it can be seen that the inventive example using the mixture of the three kinds of catalyst components (in which the burning of carbon is smoothly continued from low temperature to high temperature range) is effective in starting the burning of particulates at a low temperature and continuing the burning to the spontaneous ignition temperature of the particulates.

### Influence of Carriage of Pt

A catalytic precious metal may be carried on such a Zr-Nd mixed oxide and such a Ce-Zr-Nd mixed oxide in order to enhance the exhaust gas purification performance. In view of this, a determination was made of changes in the TG-DTA curves of the above mixed oxides when Pt was carried on the mixed oxides. Specifically, 1.9% by mass of Pt was carried on each of the Zr-Nd mixed oxide and the Ce-Zr-Nd mixed oxide, catalyst powder of the Pt-carried Zr-Nd mixed oxide and catalyst powder of the Pt-carried Ce-Zr-Nd mixed oxide were aged in the same manner as described above, a mixture sample of the Pt-carried Zr-Nd mixed oxide and carbon black and a mixture sample of the Pt-carried Ce-Zr-Nd mixed oxide and carbon black were prepared, and the mixture samples were measured in terms of TG-DTA during the burning of carbon black. The measurement results of these samples are shown in Figure 7, together with the measurement results of a mixture sample of the Pt-uncarried Zr-Nd mixed oxide and carbon black and a mixture sample of the Pt-uncarried Ce-Zr-Nd mixed oxide and carbon black.

For the Zr-Nd mixed oxide, the carriage of Pt thereon lowered the exothermic peak in the low temperature range and raised the exothermic peak in the high temperature range. However, also in the case of carriage of Pt, the Zr-Nd mixed oxide has a greater quantity of exothermic heat in the low temperature range than the Ce-Zr-Nd mixed oxide, which provides the function of taking over the burning in the low temperature range and making the transition to the burning in the intermediate temperature range. On the other hand, for the Ce-Zr Nd mixed oxide, the carriage of Pt thereon did not significantly lower the exothermic peak in the low temperature range and raised the exothermic peak in the high temperature range.

Therefore, it can be said that the carriage of Pt on the Ce-Zr-Nd mixed oxide in the inventive example is effective in promoting the burning of particulates.

### Preferred Amount of Catalyst Component

The total amount of catalyst carried on the filter body is preferably 5 to 100 g/L both inclusive (where g/L denotes the amount of catalyst carried per L of the filter body). The reason for this is as follows: if the amount of catalyst carried is too small, this cannot promote the burning of particulates; if the amount of catalyst carried is too large, the filter will be likely to be clogged.

The amount of Pt/alumina carried on the filter body is preferably 1.0 to 80 g/L both inclusive, and the amount of each of the first and second oxides carried on the filter body is preferably 0.2 to 70 g/L both inclusive. The amount of Pt carried on alumina in Pt/alumina is preferably 0.1% to 50% by mass, both inclusive, and the amount of Pt carried on each of the first and second oxides is also preferably 0.1% to 50% by mass, both inclusive.

The particulate filter according to the invention is applicable not only to diesel engines but also to any engines exhausting exhaust gas containing particulates, including lean-burn gasoline engines.

## Claims

1. A catalyst-carried particulate filter in which a catalyst is carried on the walls of exhaust gas channels (2, 3, 6) in the body of a filter for trapping particulates in exhaust gas, wherein
the catalyst contains Pt/alumina obtained by carrying Pt on alumina and first and second oxides for releasing active oxygen by heating, and
when a mixture of the Pt/alumina and carbon powder, a mixture of the first oxide and carbon powder and a mixture of the second oxide and carbon powder are measured in terms of TG-DTA, the DTA profile of the mixture containing the first oxide exhibits an exothermic peak higher than the quantity of exothermic heat of the mixture containing the Pt/alumina at a lower temperature than the temperature at the exothermic peak thereof and the DTA profile of the mixture containing the second oxide exhibits an exothermic peak higher than the quantity of exothermic heat of the mixture containing the first oxide at a lower temperature than the temperature at the exothermic peak thereof.

2. The catalyst-carried particulate filter of claim 1, wherein the first oxide is a mixed oxide having oxygen storage/release capacity and the second oxide is a mixed oxide having oxygen ion conductivity.

3. The catalyst-carried particulate filter of claim 2, wherein the first oxide is a Ce-Zr-based mixed oxide.

4. The catalyst-carried particulate filter of claim 2, wherein the first oxide is a. Ce-Zr-Nd-based mixed oxide.

5. The catalyst-carried particulate filter of any one of claims 2 to 4, wherein the second oxide is a mixed oxide containing Zr and a rare earth element other than Ce.

6. The catalyst-carried particulate filter of any one of claims 2 to 5, wherein the second oxide is a Zr-Nd-based mixed oxide.

7. The catalyst-carried particulate filter of claim 1, wherein the first oxide is a Ce-Zr-Nd-based mixed oxide, the second oxide is a Zr-Nd-based mixed oxide and a catalytic metal is carried on at least one of the first and second mixed oxides.
